# EUROPEAN PATENT APPLICATION

(11) **EP 1 713 143 A1**
(43) Date of publication of application: **18.10.2006**
(21) Application number: 06112226.3
(22) Date of filing: 05.04.2006
(51) Int. Cl.: H01M 16/00, H01M 8/04

(54) **Method for shutting down fuel cell and fuel cell system using the same**

(30) Priority: 12.04.2005 KR 2005030511
(71) Applicant: Samsung SDI Co., Ltd., Suwon-si Gyeonggi-do (KR)
(72) Inventor: Suh, Dong Myung, c/o Samsung SDI Co., Ltd., Yongin-si, Gyeonggi-do (KR)
(74) Representative: Hengelhaupt, Jürgen

(57) **Abstract**

Disclosed are a method for shutting down a fuel cell and a fuel cell system using the same. The method of shutting down a fuel cell system that comprises at least one fuel cell generating electric energy by electrochemical reaction between a gaseous hydrogen containing fuel and an oxidizing agent supplied to an anode and a cathode attached to opposite sides of an electrolyte membrane, the method includes: electrically disconnecting an external load from the fuel cell in response to a shutting down signal for the fuel cell; intercepting the gaseous fuel and the oxidizing agent; and electrically connecting output terminals coupled to the anode and the cathode of the fuel cell with equal polarity terminals of a battery.

## Description

### BACKGROUND

### 1. Field of the Invention

The present invention relates to a method for shutting down a fuel cell and a fuel cell system using the same, which can effectively remove fuel unreacted and remaining in the fuel cell when the fuel cell is shut down.

### 2. Discussion of Related Art

A fuel cell is a power generation system that directly changes chemical reaction energy due to a reaction between hydrogen and oxygen into electrical energy, in which hydrogen is contained in hydro-carbonaceous material such as methanol, ethanol, natural gas or the like.

The fuel cell is classified into a phosphate fuel cell, a molten carbonate fuel cell, a solid oxide fuel cell, a polymer electrolyte membrane fuel cell, an alkaline fuel cell, or etc. according to the kinds of electrolyte. Such fuel cells are operated on basically the same principle, but differ in the kind of fuel, the driving temperature, the catalyst, and the electrolyte, etc. from one another.

Among these fuel cells, the polymer electrolyte membrane fuel cell (PEMFC) has advantages as compared with other fuel cells in that its output performance is excellent; its operation temperature is low; its start and response are quickly performed; and it can be widely used as a portable power source for an automobile, a distributed power source for a house and public places, a micro power source for electronic devices, etc.

The PEMFC includes a stack, a reformer, a fuel tank, and a fuel pump. The fuel pump supplies fuel from the fuel tank to the reformer, and the reformer reforms the fuel to generate hydrogen gas. The stack electrochemically reacts the hydrogen gas with oxygen, thereby generating electrical energy.

As another fuel cell, there is a direct methanol fuel cell (DMFC), which is similar to the PEMFC but different in directly supplying a liquid methanol fuel to the stack. Contrary to the PEMFC, the DMFC does not use the reformer so that it is favorable to miniaturization.

The stack for the fuel cell has a structure that several tens unit cells to several hundreds of unit cells including a membrane electrode assembly (MEA) and a separator are stacked. Here, the MEA has a structure that an anode (so-called a "fuel electrode" or an "oxidation electrode") and a cathode (so-called an "air electrode" or a "reduction electrode") are attached to a polymer electrolyte membrane. Further, the separator has a structure that connects the plurality of MEAs in series, and supplies the fuel and the air to the MEA.

Meanwhile, in the case where an electronic device using the fuel cell as a power source is turned off by a user, a controller, i.e., a micro-controller or a micom of the fuel cell controls the fuel pump to stop operating, thereby shutting down the fuel cell. However, when the fuel cell is shut down, oxygen still remains in the cathode and the fuel still remains in the anode. Here, the remained oxygen oxidizes a catalyst layer or a catalyst supporting material. Further, the remained fuel chemically reacts with the catalyst and the like and thus generates carbon dioxide, carbon monoxide, etc., thereby poisoning the catalyst layer. Also, when the fuel cell is shut down, reactant fluids are unbalanced between the anode and the cathode of the fuel cell, so that the fluids undesirably move between the anode and the cathode. Thus, the conventional fuel cell system has problems that the catalyst layer and the catalyst supporting material are oxidized or corroded by the fuel and the oxidizing agent remaining when the fuel cell is shut down. In addition, the fluids internally remaining in the fuel cell deteriorates the performance of the fuel cell when it is restarted.

### SUMMARY OF THE INVENTION

Accordingly, it is an object of the present invention to provide a method for shutting down a fuel cell and a fuel cell system using the same, which can remove unreacted fuel and an oxidizing agent that remain in the fuel cell when the fuel cell is shut down, thereby not only decreasing adverse effects of when the fuel cell is restarted, but also effectively utilizing the unreacted and remaining fuel.

According to a first aspect of the present invention, there is provided a method of shutting down a fuel cell system that includes at least one fuel cell, which is generating electric energy by electrochemical reaction between a gaseous hydrogen containing fuel and an oxidizing agent, supplied to an anode and a cathode attached to opposite sides of an electrolyte membrane, the method including: electrically disconnecting an external load from the fuel cell in response to a shutting down signal for the fuel cell; intercepting the gaseous fuel and the oxidizing agent; and electrically connecting output terminals coupled to the anode and the cathode of the fuel cell with equal polarity terminals of a battery.

In a preferred embodiment of the invention, the connecting the output terminals with the battery includes electrically connecting the battery to the fuel cell when an output voltage of the fuel cell is equal to and higher than a predetermined reference voltage.

In a preferred embodiment of the invention, the method further includes electrically connecting the fuel cell with a resistor when the output voltage of the fuel cell is lower than the reference voltage.

In a preferred embodiment of the invention, the reference voltage is obtained by multiplying the number of fuel cells by 0.2V

In a preferred embodiment of the invention, the connecting the battery with the fuel cell and the connecting the resistor with the fuel cell include controlling a switching part to allow a controller to selectively connect the fuel cell with either of the battery or the resistor.

In a preferred embodiment of the invention, the method further includes sensing the temperature of the battery, and electrically disconnecting the battery from the fuel cell when the sensed temperature is equal to and higher than a reference temperature.

According to a second aspect of the present invention, there is provided a fuel cell system comprising: at least one fuel cell, which is generating electric energy by electrochemical reaction between a gaseous hydrogen containing fuel and an oxidizing agent, supplied to an anode and a cathode attached to opposite sides of an electrolyte membrane; a reactant feeder for supplying the gaseous fuel and the oxidizing agent to the fuel cell; a first switching part for electrically disconnecting an external load from the fuel cell in response to a first control signal; a second switching part for electrically connecting output terminals coupled to the anode and the cathode of the fuel cell with equal polarity terminals of a battery in response to a second control signal; and a controller for generating the first and second control signals according to a shutting down signal.

In a preferred embodiment of the invention, the controller is adapted for controlling the reactant feeder to intercept the hydrogen containing fuel and the oxidizing agent in response to the shutting down signal.

In a preferred embodiment of the invention, the fuel cell system further includes a voltage measurer for measuring an output voltage of the fuel cell, and transmitting information about the measured voltage to the controller. Further according to another preferred embodiment of the invention, the controller is adapted for controlling the second switching part to connect an internal resistor with the fuel cell when the measured voltage is equal to and lower than the reference voltage.

In a preferred embodiment of the invention, the fuel cell system further includes a temperature sensor being contacted to one terminal of the battery and being adapted to sensing the temperature of the battery and transmitting information about the measured temperature to the controller.

### BRIEF DESCRIPTION OF THE DRAWINGS

These and/or other objects and advantages of the invention will become apparent and more readily appreciated from the following description of the preferred embodiments, taken in conjunction with the accompanying drawings of which:

FIG. 1 is a flowchart of a fuel cell shutting down method according to a first embodiment of the present invention;

FIG. 2 is a flowchart of a fuel cell shutting down method according to a second embodiment of the present invention;

FIG. 3 is a block diagram of a fuel cell system employing the fuel cell shutting down method according to an embodiment of the present invention; and

FIG. 4 illustrates operations of the PEMFC usable in the fuel cell system of FIG. 3.

### DETAILED DESCRIPTION

Hereinafter, embodiments of the present invention will be described with reference to accompanying drawings, which can be easily appreciated by a person having an ordinary skill in the art.

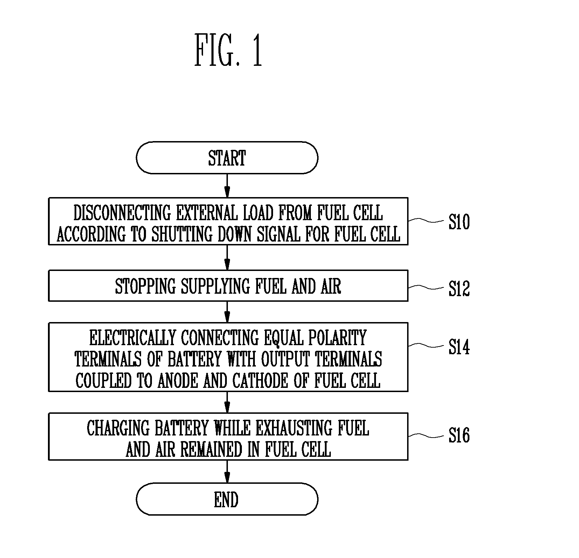

FIG. 1 is a flowchart of a fuel cell shutting down method according to a first embodiment of the present invention.

Referring to FIG. 1, the fuel cell shutting down method according to the first embodiment of the present invention is as follows. At operation S10 an external load is electrically disconnected from the fuel cell by a shutting down signal, thereby exhausting reactant fluids remaining in internal pipes of a fuel cell when the fuel cell is shut down. Here, the external load includes an application, e.g., a portable terminal, a notebook computer, and the like, which employ the fuel cell as a power source. Further, the shutting down signal denotes a predetermined signal that is generated when a user presses a shut-down button of the fuel cell or when the application is turned off, and transmitted to a controller of the fuel cell.

At operation S12, the reactant fluids, e.g., a hydrogen containing fuel and an oxidizing agent are prevented from being supplied to the fuel cell. Here, the hydrogen containing fuel includes methanol, and the oxidizing agent includes air or oxygen.

At operation S 14, two output terminals coupled to an anode and a cathode of the fuel cell are electrically connected to equal polarity terminals of a battery. In other words, one output terminal coupled to the anode of the fuel cell is connected to the anode terminal of the battery, and the other output terminal coupled to the cathode of the fuel cell is connected to the cathode terminal of the battery.

At operation S16, the battery is charged with electric energy generated while exhausting the fuel and air remaining in the fuel cell. At this time, the battery can be used for supplying electric power to the controller, a pump and the like of the fuel cell when the fuel cell is initially driven. Here, the battery includes a secondary battery, which is rechargeable at least two times.

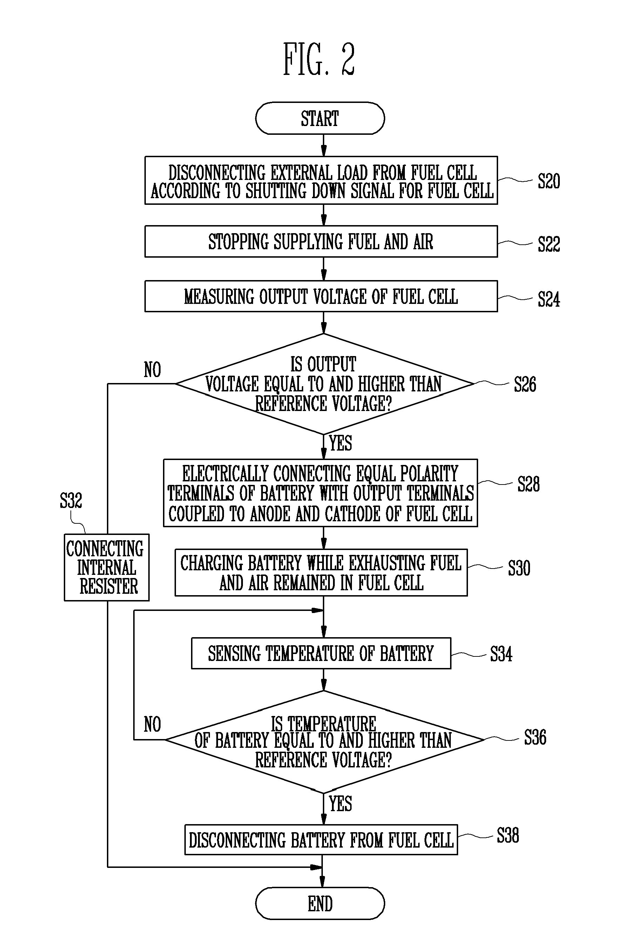

FIG. 2 is a flowchart of a fuel cell shutting down method according to a second embodiment of the present invention.

Referring to FIG. 2, the fuel cell shutting down method according to the first embodiment of the present invention is as follows. At operation S20 an external load is electrically disconnected from the fuel cell by a shutting down signal, thereby exhausting reactant fluids remaining in internal pipes of a fuel cell when the fuel cell is shut down.

At operation S22, the reactant fluids, e.g., a hydrogen containing fuel and an oxidizing agent are prevented from being supplied to the fuel cell.

At operation S24, an output voltage of the fuel cell is measured. At operation S26, it is determined that the measured output voltage is higher than a predetermined reference voltage. Here, the reference voltage is set as a chargeable voltage for the battery. For example, a voltage of 0.2V is set as the reference voltage per unit fuel cell. When the output voltage is equal to and higher than the reference voltage, at operation S28 the output terminals of the fuel cell are electrically connected to the equal polarity terminals of the battery. Then, at operation S30, the fuel and the air remained in the fuel cell are exhausted and generate electric energy, thereby charging the battery with the electric energy.

At operation S32, when the output voltage is lower than the reference voltage, the output terminals of the fuel cell are connected with an internal resistor. Here, any resistor having a predetermined resistance value can be used as the internal resistor as long as it is connected to the anode and the cathode of the fuel cell and allowing electrons to move from the anode to the cathode. Further, the resistance value of the internal resistor is properly set to quickly exhaust the fuel and air remained in the fuel cell when the fuel cell is shut down.

At operation S34, the temperature of the battery is sensed. Then, at operation S38, it is determined whether the sensed temperature is equal to or higher than a reference temperature. Such operations are performed to prevent the battery from being damaged by an overcharge and the like. In other words, according to the output of the fuel cell, or the capacity or the state of the battery, the battery may be fully charged before shutting down the fuel cell. In this case, the battery is likely to be damaged by the overcharge. Therefore, according to an embodiment of the present invention, a temperature sensing device, e.g., a temperature sensor being in contact with the battery is used to prevent the battery from being damaged by the over charge and the like.

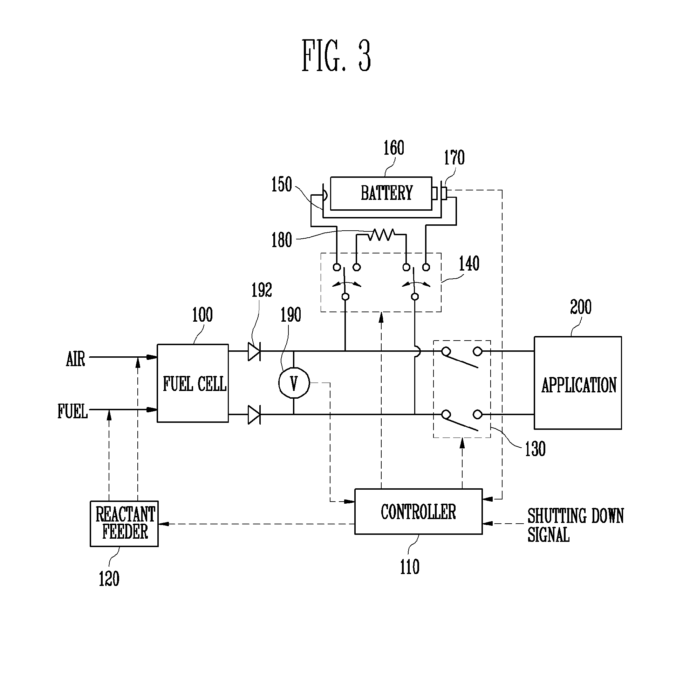

FIG. 3 is a block diagram of a fuel cell system employing the fuel cell shutting down method according to an embodiment of the present invention.

Referring to FIG. 3, the fuel cell system employing the fuel cell shutting down method prevents a catalyst layer or a catalyst layer supporting material from being oxidized or corroded by the fuel and air remained in an internal pipe of a fuel cell 100, thereby maintaining the performance of the fuel cell when it is restarted. For this, the fuel cell system includes the fuel cell 100, a controller 110, a reactant feeder 120, a first switching part 130, a second switching part 140, a battery housing 150, a battery 160, a temperature sensor 170, a resistor 180, a voltage measurer 190, and a diode 192.

In more detail, the fuel cell 100 receives a reactant, e.g., a liquid methanol fuel and air, and generates electric energy due to electrochemical reaction between the reactant and air. The fuel cell 100 includes a PEMFC having a reformer to reform a hydrogen containing fuel, and a DMFC capable of directly supplying the liquid methanol fuel to a stack.

Further, the fuel cell 100 includes an active fuel cell supplying the fuel and air to an MEA by a pump or a blower, and a passive fuel cell supplying the fuel and air without the pump or the blower. In the case of the passive fuel cell, a fuel intercepting means, e.g., a valve and the like may be provided to intercept the fuel and air to be supplied to the fuel cell 100.

The controller 110 generates a first control signal and a second control signal in response to a shutting down signal. The first control signal is transmitted to the first switching part 130, and the second control signal is transmitted to the second switching part 140. Further, the controller 110 generates a third control signal in response to the shutting down signal, and transmits the third control signal to the reactant feeder 120.

Also, the controller 110 receives a predetermined electric signal from the temperature sensor 170. Here, the temperature sensor 170 senses the temperature of the battery 160 that contacts one terminal of the battery housing 150 and is inserted into the battery housing 150, thereby generating the electric signal having a level corresponding to the sensed temperature. Further, the electric signal includes a voltage and/or a current. The controller 110 is connected to an output terminal of the fuel cell 100, and receives another electric signal having a level corresponding to a voltage measured by the voltage measurer 190.

The controller 110 includes an oscillator to generate a predetermined control signal in response to the received electric signal, and a comparator to compare the sensed temperature and the measured voltage with a reference temperature and a reference voltage, respectively.

The reactant feeder 120 includes a pump or a blower to supply the fuel and air. Further, the reactant feeder 120 can include a valve and an operator to operate the valve according to the structures of the fuel cell. Also, the reactant feeder 120 intercepts the fuel and air supplied to the fuel cell 100 in response to the third control signal from the controller 110.

The first switching part 130 is provided between the fuel cell 100 and an application 200, and controls the fuel cell 100 to be connected to or disconnected from the application 200. Alternatively, the first switching part 130 may be integrally provided in a converter, e.g., a DC/DC converter placed between the fuel cell 100 and the application 200.

While the fuel cell 100 is operating, the first switching part 130 electrically connects the fuel cell 100 and the application 200, thereby supplying output electricity from the fuel cell 100 to the application 200. On the other hand, the first switching part 130 electrically disconnects the fuel cell from the application 200 in response to the first control signal.

The second switching part 140 is provided between the fuel cell 100 and the battery 160, and controls the fuel cell 100 to be connected to or disconnected from the battery 160. Alternatively, the second switching part 140 may be integrally provided in a converter, e.g., a DC/DC converter placed between the fuel cell 100 and the battery 160. Here, the DC/DC converter may be provided as a single unit and include both the first and second switching parts 130 and 140. Further, the DC/DC converter may be provided as two units and include the first and second switching parts 130 and 140, respectively.

While the fuel cell 100 is operating, the second switching part 140 electrically connects the equal polarity terminals of the fuel cell 100 and the battery 200. With this configuration, the fuel and air remaining in the internal pipe of the fuel cell 100 are exhausted. Further, the electric energy generated at the same time is charged in the battery 160.

The battery 160 is inserted in the battery housing 150, and electrically connected to the output terminal of the fuel cell 100 by the second switching part 140. One terminal of the battery housing 150 is in contact with the temperature sensor 170 to sense the temperature of the battery 160. Here, the temperature sensor 170 includes a platinum resistance thermometer.

The resistor 180 is provided to smoothly shut down the fuel cell 100 when the output voltage of the fuel cell 100 is lower than the reference voltage. Here, the resistor 180 includes an electric wire connecting the anode and the cathode of the fuel cell 100 and forming an electron passage. Further, the resistor 180 has a resistance proper to quickly exhaust the fuel and air remaining in the internal pipe of the fuel cell 100.

The voltage measurer 190 measures the output voltage of the fuel cell 100. The voltage measurer 190 may act as another internal resistor in addition to the resistor 180, so that the voltage measurer 190 can be connected to the output terminal of the fuel cell 100 only when the output voltage is measured.

The diode 192 is provided adjacent to the output terminal of the fuel cell 100. The diode 192 prevents current from flowing in a direction from the battery 160 or the application 200 to the fuel cell 100.

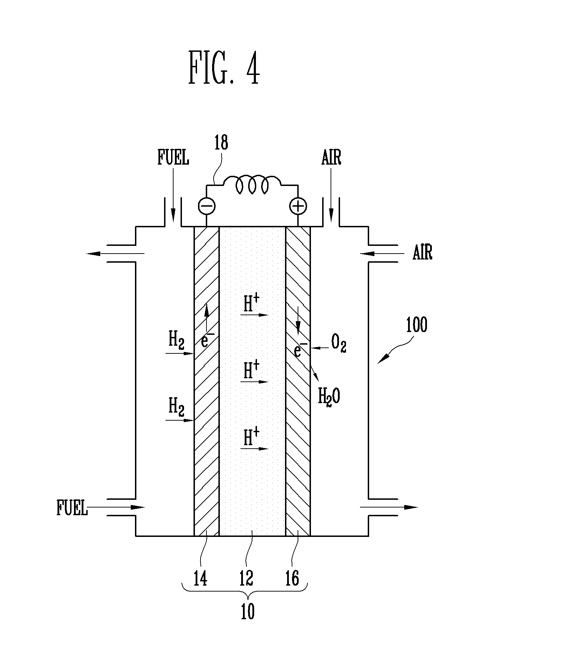

FIG. 4 illustrates operations of the PEMFC usable in the fuel cell system of FIG. 3.

Referring to FIG. 4, an MEA 10 of the fuel cell 100 includes a polymer electrolyte membrane 12, an anode 14 and a cathode 16. When hydrogen gas or a hydrogen containing fuel is supplied to the anode 14 of the fuel cell 10, electrochemical oxidation arises in the anode 14, thereby ionizing hydrogen into hydrogen ion H⁺ and electron e⁻. The hydrogen ion moves from the anode 14 toward the cathode 16 through the MEA 12, and the electron moves from the anode 14 toward the cathode 16 through an external electric wire 18. In the cathode 16, the hydrogen ion electrochemically reacts with oxygen (reduction reaction), thereby producing reaction heat and water. At this time, electric energy is generated as the electron moves.

The foregoing fuel cell includes the PEMFC and the DMFC. The electrochemical reactions of the PEMFC and the DMFC are as follows, respectively.

[Reaction 1]

In the anode: H₂ → 2H⁺ + 2e⁻

In the cathode: 1/2O₂ + 2H⁺ + 2e⁻ → H₂O

[Reaction 2]

In the anode: CH₃OH(g) + H₂O→ CO₂ + 6H⁺ + 6e⁻

In the cathode: 3/2O₂ + 6H⁺ + 6e⁻ → 3H₂O

With this configuration, the fuel and air unreacted and remaining in the internal pipe of the fuel cell are effectively removed when the fuel cell is shut down. Therefore, a catalyst layer, a catalyst layer supporting material, etc. of the fuel cell is prevented from being oxidized or corroded by the remained fuel, thereby maintaining the performance of the fuel cell when it is restarted. Further, the electric energy generated by the remained reactant is used for charging the battery, so that the fuel cell is more effectively utilized.

## Claims

1. A method of shutting down a fuel cell system that comprises at least one fuel cell, which is generating electric energy by electrochemical reaction between a gaseous hydrogen containing fuel and an oxidizing agent, supplied to an anode and a cathode attached to opposite sides of an electrolyte membrane, the method comprising:
electrically disconnecting an external load from the fuel cell in response to a shutting down signal for the fuel cell;
intercepting the gaseous fuel and the oxidizing agent; and
electrically connecting output terminals coupled to the anode and the cathode of the fuel cell with equal polarity terminals of a battery.

2. The method according to claim 1, wherein the connecting the output terminals with the battery comprises electrically connecting the battery to the fuel cell when an output voltage of the fuel cell is equal to and higher than a predetermined reference voltage.

3. The method according to claim 2, further comprising electrically connecting the fuel cell with a resistor when the output voltage of the fuel cell is lower than the reference voltage.

4. The method according to claim 3, wherein the reference voltage is obtained by multiplying the number of fuel cells by 0.2V

5. The method according to claim 3, wherein the connecting the battery with the fuel cell and the connecting the resistor with the fuel cell comprise controlling a switching part to allow a controller to selectively connect the fuel cell with either of the battery or the resistor.

6. The method according to claim 1, further comprising sensing the temperature of the battery, and electrically disconnecting the battery from the fuel cell when the sensed temperature is equal to and higher than a reference temperature.

7. A fuel cell system comprising:
at least one fuel cell, which is generating electric energy by electrochemical reaction between a gaseous hydrogen containing fuel and an oxidizing agent, supplied to an anode and a cathode attached to opposite sides of an electrolyte membrane;
a reactant feeder for supplying the gaseous fuel and the oxidizing agent to the fuel cell;
a first switching part for electrically disconnecting an external load from the fuel cell in response to a first control signal;
a second switching part for electrically connecting output terminals coupled to the anode and the cathode of the fuel cell with equal polarity terminals of a battery in response to a second control signal; and
a controller for generating the first and second control signals according to a shutting down signal.

8. The fuel cell system according to claim 7, wherein the controller is adapted for controlling the reactant feeder to intercept the hydrogen containing fuel and the oxidizing agent in response to the shutting down signal.

9. The fuel cell system according to claim 7, further comprising a voltage measurer for measuring an output voltage of the fuel cell, and transmitting information about the measured voltage to the controller.

10. The fuel cell system according to claim 9, wherein the controller is adapted for controlling the second switching part to connect an internal resistor with the fuel cell when the measured voltage is equal to and lower than the reference voltage.

11. The fuel cell system according to claim 7, further comprising a temperature sensor being contacted to one terminal of the battery and being adapted to sensing the temperature of the battery and transmitting information about the measured temperature to the controller.
